# EUROPEAN PATENT SPECIFICATION

(11) **EP 2 736 196 B1**
(45) Date of publication and mention of the grant of the patent: **09.09.2015**
(21) Application number: 12814733.7
(22) Date of filing: 10.07.2012
(51) Int. Cl.: H04L 12/18

(54) **METHOD AND DEVICE FOR REALIZING MULTICAST SERVICE**
VERFAHREN UND VORRICHTUNG ZUR AUSFÜHRUNG EINES MULTICAST-DIENSTES
PROCÉDÉ ET DISPOSITIF POUR RÉALISER UN SERVICE DE DIFFUSION GROUPÉE

(30) Priority: 19.07.2011 CN 201110202423
(43) Date of publication of application: 28.05.2014
(73) Proprietor: ZTE Corporation, Shenzhen, Guangdong 518057 (CN)
(72) Inventor: CAO, Dengyuan, Shenzhen Guangdong 518057 (CN)
(74) Representative: Cabinet Laurent & Charras
(86) International application number: PCT/CN2012/078399
(87) International publication number: WO 2013/010443

(56) References cited:
- WO-A1-2006/075277
- CN-A- 1 756 216
- CN-A- 101 304 548
- CN-A- 102 056 082
- CN-A- 102 325 035
- US-A1- 2002 126 671
- US-A1- 2009 190 474
- US-A1- 2009 219 945
- US-A1- 2010 146 135

## Description

### Technical Field

The present document relates to the communication technology field, and in particular, to a method and device for realizing multicast service.

### Background of the Related Art

The multicast service is a transmission service sent by a single data source and received by multiple receiving sources. The multicast service is a single point-to-multipoint service, so its data transmission efficiency is high, thus achieving the target of saving the network bandwidth and reducing the network load. The multicast service can realize live video, internet telephony, video conference, etc.

However, different multicast services have different requirements on the transmission conditions such as bandwidth, delay time, jitter, real-time performance, etc., for example, the network television multicast service has a high requirement on jitter, and the video conference multicast service has a high requirement on real-time performance. Meanwhile, different user grades have different bandwidth resource requirements. But in the related art, it does not distinguish different multicast services and user grades, that is, different multicast services adopt the same transmission condition, and different user grades adopt the same bandwidth resources, thus the requirements of different multicast services and user grades can not be meter

US 2010/146135A1 discloses a system for and method of per access-point streaming media customization and privacy protected feedback in a wireless network. The system is operative to: encrypt real time streamed media content from a streaming media source: multicast the streamed encrypted media content for availability to a user device for playback, the user device spending out unicast responses at the time of joining or dropping the multicast; aggregate the unicast responses in the form of a connect multicast state or a disconnect multicast state of the user device based on the joining or dropping of the multicast; and provide information back to the streaming media source based on the aggregated unicast responses.

### Summary of the Invention

The embodiment of the present document provides a method and device for realizing multicast service, used to solve the problem that the multicast services are not distinguished and different multicast service requirements are not satisfied during the current realization procedure of the multicast service.

The embodiment of the present document provides a method for realizing a multicast service, comprising:
receiving a multicast service joining request, and matching multicast service identification information carried in the multicast service joining request with self-stored identification information of each multicast service requiring service guarantees;
when matching the multicast service identification information successfully, allocating a service queue corresponding to stored and successfully matched multicast service identification information to the multicast service and realizing the multicast service by adopting the service queue; and
when matching the multicast service identification information unsuccessfully, allocating a default service queue to the multicast service, and realizing the multicast service by adopting the default service queue.

The method further comprises:
matching user grade identification information carried in the multicast service joining request with self-stored user identification information; and
when matching the user grade identification information successfully, allocating a user queue to the multicast service according to configuration parameter information corresponding to the successfully matched user grade identification information; and when matching the user grade identification information unsuccessfully, allocating a default user queue to the multicast service.

The method further comprises:
receiving configuration parameter updating information, and establishing a corresponding relation between the user grade identification information and updated configuration parameter information according to the updated configuration parameter information and the user grade identification information carried in the configuration parameter updating information.

The method further comprises:
receiving a multicast service releasing request, and matching the multicast service identification information carried in the multicast service releasing request with the self-stored identification information of each multicast service requiring service guarantees; and
when matching the multicast service identification information successfully, releasing the service queue corresponding to the successfully matched multicast service identification information.

The method further comprises:
receiving service queue updating information, and establishing a corresponding relation between the multicast service identification information and updated service queue information according to the updated service queue information and the multicast service identification information carried in the service queue updating information.

The embodiment of the present document provides a device for realizing a multicast service, comprising a matching module, a first allocation realization module and a second allocation realization module, wherein:
the matching module is configured to receive a multicast service joining request, and match multicast service identification information carried in the multicast service joining request with self-stored identification information of each multicast service requiring service guarantees;
the first allocation realization module is configured to: when matching the multicast service identification information successfully, allocate a service queue corresponding to stored and successfully matched multicast service identification information to the multicast service and realize the multicast service by adopting the service queue; and
the second allocation realization module is configured to: when matching the multicast service identification information unsuccessfully, allocate a default service queue to the multicast service, and realize the multicast service by adopting the default service queue.

The matching module is further configured to match user grade identification information carried in the multicast service joining request with self-stored user identification information; and
the first allocation realization module is further configured to: when matching the user grade identification information successfully, allocate a user queue to the multicast service according to configuration parameter information corresponding to the successfully matched user grade identification information; and when matching the user grade identification information unsuccessfully, allocate a default user queue to the multicast service.

The device further comprises an updating module, wherein:
the updating module is configured to receive configuration parameter updating information, and establish a corresponding relation between the user grade identification information and updated configuration parameter information according to the updated configuration parameter information and the user grade identification information carried in the configuration parameter updating information.

The matching module is further configured to receive a multicast service releasing request, and match the multicast service identification information carried in the multicast service releasing request with the self-stored identification information of each multicast service requiring service guarantees; and
the device further comprises a releasing module, configured to: when matching the multicast service identification information successfully, release the service queue corresponding to the successfully matched multicast service identification information.

The updating module is further configured to receive service queue updating information, and establish a corresponding relation between the multicast service identification information and updated service queue information according to the updated service queue information and the multicast service identification information carried in the service queue updating information.

The embodiment of the present document provides a method and device for realizing multicast service. In the method, when a multicast service joining request is received, the multicast service identification information carried in the multicast service joining request is matched with self-stored identification information of each multicast service requiring the service guarantees; if matching the multicast service identification information successfully, a service queue corresponding to the stored and successfully matched multicast service identification information is allocated to the multicast service and the multicast service is realized; and if matching the multicast service identification information unsuccessfully, a default service queue is adopted to realize the multicast service. In the embodiment of the present document, corresponding service queues satisfying the multicast services are configured for different multicast services, therefore, when the multicast service joining request is received, the corresponding service queue is allocated to the multicast service according to the multicast service identification information carried in the multicast service joining request and the multicast service is realized, thus satisfying the requirements of different multicast services and facilitating the improvement of the service quality of the multicast service.

### Brief Description of Drawings

The accompanying drawings described herein are used to provide further understanding for the present document and constitute a part of the present application. The illustrated embodiments of the present document and the description thereof are used to explain the present document, rather than constituting an inappropriate limitation on the present document. Wherein:
FIG. 1 is a diagram of a realization process of a multicast service according to an embodiment of the present document;
FIG. 2 is a diagram of a detailed realization process of a multicast service provided by an embodiment of the present document;
FIG. 3 is a structure diagram of a device for realizing a multicast service provided by an embodiment of the present document.

### Preferred Embodiments of the Invention

The technical scheme of the present document is described in detail with reference to the accompanying drawings and in combination with embodiments hereinafter. It should be understood that the embodiments described here are only used to explain the technical scheme of the present document and is not intended to limit the protection scope of the present document.

The embodiment of the present document provides a method and device for realizing multicast service in order to meet the requirements of different multicast services and improve the service quality of the multicast service.

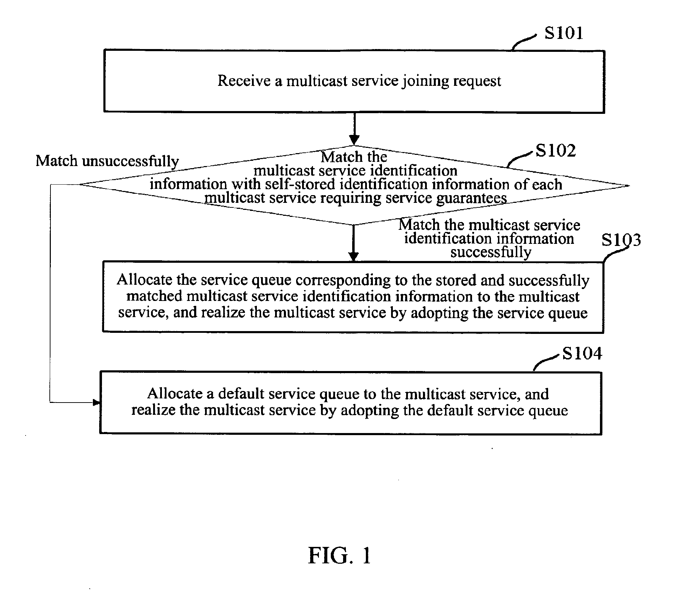

FIG. 1 is a diagram of a realization process of a multicast service according to an embodiment of the present document, and this process includes the following steps:
In S101, a multicast service joining request is received;
   wherein, the multicast service joining request carries the multicast service identification information, the multicast service identification information can be an identification number (IDentity, ID) of the multicast service, and also can be name information of the multicast service, etc.; the information can be regarded as the identification information of the multicast service so long as it can uniquely identify the multicast service;
in S102, the multicast service identification information carried in the multicast service joining request is matched with the self-stored identification information of each multicast service requiring service guarantees; step S103 is executed when matching the multicast service identification information successfully; and step S104 is executed when matching the multicast service identification information unsuccessfully;
in S103, the service queue corresponding to the stored and successfully matched multicast service identification information is allocated to the multicast service, and the multicast service is realized by adopting the service queue;
specifically, in the embodiment of the present document, in order to meet the requirements of different multicast services and guarantee the service quality of the multicast service, the identification information of each multicast service requiring service guarantees is stored, and a corresponding service queue is set for each multicast service according to the requirement of different multicast services, each service queue meets the corresponding requirement of a distinct multicast service, and each service queue adopts different quality parameters, and the corresponding relation between the identification information of each multicast service and the corresponding allocated service queue is stored, so as to allocate the service queue to the multicast service according to the corresponding relation when allocating the service queues;
for example, as to the network telephone multicast service, the service queue with a smaller jitter can be allocated to the multicast service, that is, the corresponding relation between the identification information of the multicast service of the network telephone and the service queue with a smaller jitter can be stored;
in S104, a default service queue is allocated to the multicast service, and the multicast service is realized by adopting the default service queue.

For the multicast service without requirement on the transmission condition in the embodiment of the present document, a default service queue can be allocated to the multicast service, that is, realizing the multicast service by adopting the current multicast service realization way.

Because the corresponding service queues satisfying the multicast services are set for different multicast services in the embodiment of the present document, the corresponding service queue is allocated to the multicast service to realize the multicast service according to the multicast service identification information carried in the multicast service joining request when receiving the multicast service joining request, thus meeting the requirements of different multicast services and being beneficial to the improvement of the service quality of the multicast service.

In addition, because different user grades have different requirements on the bandwidth, in order to meet the bandwidth requirements of different user grades, the corresponding parameters are configured for different user grades, and the corresponding relation between grade identification information of each user and the configured parameter information is stored. When a certain user grade is not configured with the parameter information, then the user grade is thought to be corresponding to the default parameter information, and the user queue can be allocated to the multicast service according to the default parameter information.

The method of the embodiment of the present document can further include the following steps:
matching user grade identification information carried in the multicast service joining request with the self-stored user identification information; and
allocating a user queue to the multicast service according to configuration parameter information corresponding to the successfully matched user grade identification information when matching the user grade identification information successfully; and allocating a default user queue to the multicast service when matching the user grade identification information unsuccessfully.

And the bandwidth conditions required by the users of different grades may keep changing, in order to meet different grade user requirements, when the requirement of the user of that grade changes, the configuration parameter information of the user of that grade needs to be updated. That method further includes: receiving configuration parameter updating information, and establishing a corresponding relation between the user grade identification information and the updated configuration parameter information according to the updated configuration parameter information and the user grade identification information carried in the configuration parameter updating information.

In addition, the requirement on the transmission condition of the multicast service may keep changing in the embodiment of the present document, and it needs to adopt other service queues to realize the multicast service at this moment. In order to meet various multicast service requirements timely and accurately in the embodiment of the present document, when the transmission condition of a certain multicast service changes, the method further includes: receiving service queue updating information, and establishing a corresponding relation between the multicast service identification information and the updated service queue information according to the updated service queue information and the multicast service identification information carried in the service queue updating information.

After a certain multicast service is finished in the embodiment of the present document, a multicast service releasing request will be sent, and it needs to release the corresponding resources at this moment. Specifically, in the embodiment of the present document, when receiving the multicast service releasing request, the multicast service identification information carried in the multicast service releasing request is matched with the self-stored identification information of each multicast service requiring service guarantees; and
the service queue corresponding to the successfully matched multicast service identification information is released when matching the multicast service identification information successfully.

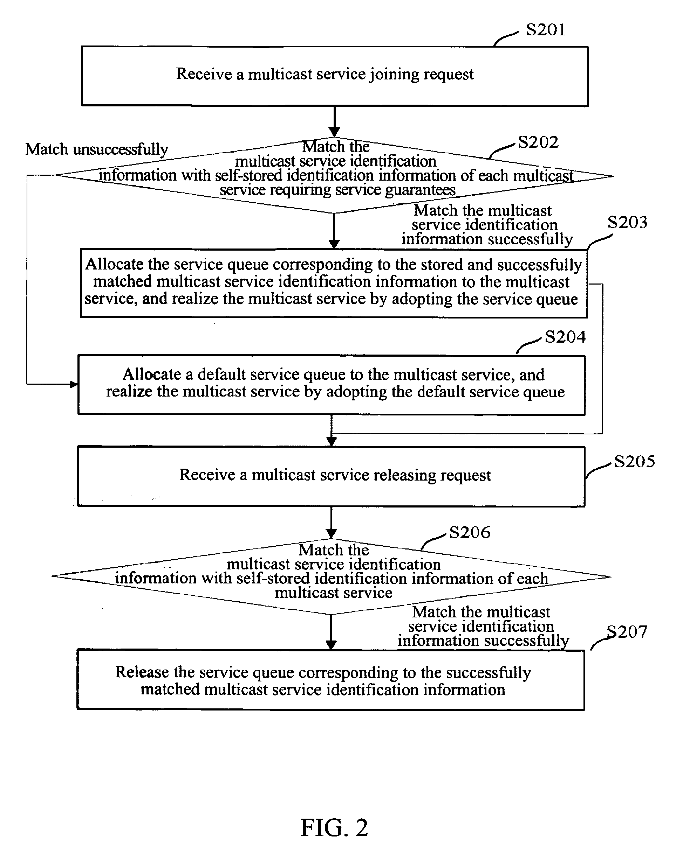

FIG. 2 is a diagram of a detailed realization process of a multicast service provided by an embodiment of the present document, and the process includes the following steps:
In S201, a multicast service joining request is received;
when receiving the multicast service joining request, the relevant entry configuration is copied according to the transmitting requirement of the multicast service, and the multicast data package is copied;
in S202, the multicast service identification information carried in the multicast service joining request is matched with the self-stored identification information of each multicast service requiring service guarantees; step S203 is executed when matching the multicast service identification information successfully; and step S204 is executed when matching the multicast service identification information unsuccessfully;
in S203, the service queue corresponding to the stored and successfully matched multicast service identification information is allocated to the multicast service, and the multicast service is realized by adopting the service queue; and then step S205 is executed;
specifically, the corresponding relation between the identification information of each multicast service and the service quality parameter information also can be stored, and the mapping relation between the service quality parameter information and the service queue is stored; the configuration of the corresponding service quality parameter is determined according to the multicast service identification information, and the mapping from the internal index to the service queue is generated according to the mapping relation between the service quality parameter and the service queue;
in S204, a default service queue is allocated to the multicast service, and the multicast service is realized by adopting the default service queue;
when the identification information of the multicast service in the multicast service joining request is normal multicast service identification information, that is, the requirement of the multicast service on the transmitting condition is not high, a default quality parameter is allocated to the multicast service, and the mapping from the default internal index to the default service queue is generated;
in S205, a multicast service releasing request is received;
in S206, the multicast service identification information carried in the multicast service releasing request is matched with the self-stored identification information of each multicast service requiring service guarantees; and step S207 is executed when matching the multicast service identification information successfully;
in S207, the service queue corresponding to the successfully matched multicast service identification information is released.

It needs to release the service queue at this moment, and relieve the mapping to the service queue and release the internal index, so as to be used by the multicast service at other time points.

Specifically, in the embodiment of the present document, the multicast service requiring no service guarantees is allocated with the default service queue, that is, the service queue is allocated to the multicast service by adopting the relevant technical scheme. Because the same default service queue may be allocated to different multicast services, when receiving the multicast service releasing request, if the default service queue is only used by the multicast service, then the default service queue can be released at this moment; if the default service queue is also used by other multicast services at this moment, then the default service queue cannot be released at this moment.

Alternatively, in the embodiment of the present document, each corresponding default service queue is allocated to each multicast service requiring no service guarantees, that is to say, each default service queue is only used by one multicast service; when receiving the multicast service releasing request, the default service queue is released.

It is described with a specific embodiment hereinafter.

The multicast service joining request is received, the multicasting relevant entry and the multicast data packet are copied. When the multicast service identification information included in the multicast service joining request indicates a normal multicast service, that is, when matching with the stored identification information of each multicast service requiring the service guarantees unsuccessfully, the default index is obtained, the default service queue is allocated (allocated on the basis of physical or logical port), and the reference counter is added by 1, and then the mapping of the default index to the default service queue is set.

When the multicast service identification information included in the multicast service joining request indicates a special multicast service, that is, when matching with the stored identification information of each multicast service requiring the service guarantees successfully, the internal index is required and the corresponding service queue is determined, and the mapping from the internal index to the service queue is set according to the corresponding relation between the multicast service identification information and the service quality parameter information, and the mapping relation between the service quality parameter information and the service queue.

The corresponding relation between the user grade identification information and the updated configuration parameter information is established according to the updated configuration parameter information and the user grade identification information carried in the configuration parameter updating information. And the corresponding relation between the multicast service identification information and the updated service queue information is established according to the updated service queue information and the multicast service identification information carried in the service queue updating information.

When receiving the multicast service releasing request, and when the multicast service is a special multicast service, that is, when matching the multicast service identification information carried in the multicast service releasing request with the stored identification information of each multicast service requiring the service guarantees successfully, the copied relevant entry is deleted, the internal index is released, and the service queue corresponding to the successfully matched multicast service identification information is released, and the mapping from the internal index to the service queue is deleted, and the mapping relation between the default service queue is restored.

When the multicast service is a normal multicast service, that is, when matching the multicast service identification information carried in the multicast service releasing request with the stored identification information of each multicast service requiring the service guarantees unsuccessfully, the copied relevant entry is deleted, and the reference counter is subtracted by 1; if the reference counter is not 0, then the operation ends, that is, other multicast services use the default service queue at this moment; otherwise, the default service queue is released, and the mapping from the internal index to the service queue is deleted.

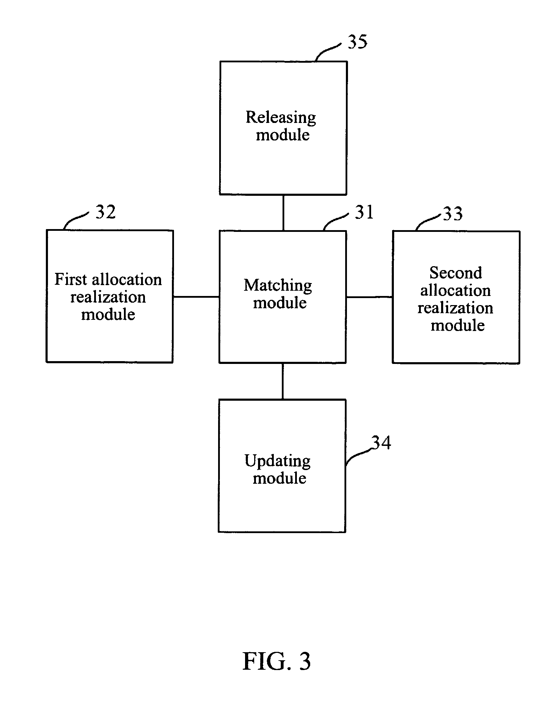

FIG. 3 is a structure diagram of a device for realizing a multicast service provided by an embodiment of the present document. The device includes a matching module 31, a first allocation realization module 32 and a second allocation realization module 33, wherein:
the matching module 31 is configured to receive a multicast service joining request, and match multicast service identification information carried in the multicast service joining request with the self-stored identification information of each multicast service requiring service guarantees;
the first allocation realization module 32 is configured to: allocate a service queue corresponding to the stored and successfully matched multicast service identification information to the multicast service and realize the multicast service by adopting the service queue when matching the multicast service identification information successfully; and
the second allocation realization module 33 is configured to: allocate a default service queue to the multicast service, and realize the multicast service by adopting the default service queue when matching the multicast service identification information unsuccessfully.

The matching module 31 is further configured to match user grade identification information carried in the multicast service joining request with the self-stored user grade identification information; and
the first allocation realization module 32 is further configured to allocate a user queue to the multicast service according to configuration parameter information corresponding to the successfully matched user grade identification information when matching the user grade identification information successfully; and allocate a default user queue to the multicast service when matching the user grade identification information unsuccessfully.

The device further includes an updating module 34, the updating module 34 is configured to receive configuration parameter updating information, and establish a corresponding relation between the user grade identification information and the updated configuration parameter information according to the updated configuration parameter information and the user grade identification information carried in the configuration parameter updating information.

The matching module 31 is further configured to receive a multicast service releasing request, and match the multicast service identification information carried in the multicast service releasing request with the self-stored identification information of each multicast service requiring service guarantees; and
the device further includes a releasing module 35, the releasing module 35 is configured to release the service queue corresponding to the successfully matched multicast service identification information when matching the multicast service identification information successfully.

The updating module 34 is further configured to receive service queue updating information, and establish a corresponding relation between the multicast service identification information and the updated service queue information according to the updated service queue information and the multicast service identification information carried in the service queue updating information.

The embodiment of the present document provides a method and device for realizing multicast service. In the method, when a multicast service joining request is received, the multicast service identification information carried in the multicast service joining request is matched with the self-stored identification information of each multicast service requiring the service guarantees; if matching the multicast service identification information successfully, a service queue corresponding to the stored and successfully matched multicast service identification information is allocated to the multicast service and the multicast service is realized; and if matching the multicast service identification information unsuccessfully, a default service queue is adopted to realize the multicast service. In the embodiment of the present document, corresponding service queues satisfying the multicast services are configured for different multicast services, therefore, when the multicast service joining request is received, the corresponding service queue is allocated to the multicast service according to the multicast service identification information carried in the multicast service joining request and the multicast service is realized, thus satisfying the requirements of different multicast services and facilitating the improvement of the service quality of the multicast service.

The above-mentioned description has shown and described a preferred embodiment of the present document, but as noted previously, it should be understood that the protection scope of the present document is not limited to the form disclosed by the present document, and it should not be regarded as the exclusion of other embodiments, but can be used in various other combination, modification and the environments, and can be changed through the above-mentioned instruction or the technology or knowledge of the related field within the range of the invention conceive described in the present document.

### Industrial Applicability

In the embodiment of the present document, corresponding service queues satisfying the multicast services are configured for different multicast services, therefore, when the multicast service joining request is received, the corresponding service queue is allocated to the multicast service according to the multicast service identification information carried in the multicast service joining request and the multicast service is realized, thus satisfying the requirements of different multicast services and facilitating the improvement of the service quality of the multicast service.

## Claims

1. A method for realizing a multicast service, comprising:
receiving a multicast service joining request, and matching multicast service identification information carried in the multicast service joining request with self-stored identification information of each multicast service requiring service guarantees;
when matching the multicast service identification information successfully, allocating a service queue corresponding to stored and successfully matched multicast service identification information to the multicast service and realizing the multicast service by adopting the service queue; and
when matching the multicast service identification information unsuccessfully, allocating a default service queue to the multicast service, and realizing the multicast service by adopting the default service queue.

2. The method according to claim 1, further comprising:
matching user grade identification information carried in the multicast service joining request with self-stored user identification information; and
when matching the user grade identification information successfully, allocating a user queue to the multicast service according to configuration parameter information corresponding to the successfully matched user grade identification information; and when matching the user grade identification information unsuccessfully, allocating a default user queue to the multicast service;
and further comprising:
receiving configuration parameter updating information, and establishing a corresponding relation between the user grade identification information and updated configuration parameter information according to the updated configuration parameter information and the user grade identification information carried in the configuration parameter updating information.

3. The method according to claim 1, further comprising:
receiving a multicast service releasing request, and matching the multicast service identification information carried in the multicast service releasing request with the self-stored identification information of each multicast service requiring service guarantees; and
when matching the multicast service identification information successfully, releasing the service queue corresponding to the successfully matched multicast service identification information.

4. The method according to claim 1, further comprising:
receiving service queue updating information, and establishing a corresponding relation between the multicast service identification information and updated service queue information according to the updated service queue information and the multicast service identification information carried in the service queue updating information.

5. A device for realizing a multicast service, comprising a matching module (31), a first allocation realization module (32) and a second allocation realization module 33 wherein:
the matching module is configured to receive a multicast service joining request, and match multicast service identification information carried in the multicast service joining request with self-stored identification information of each multicast service requiring service guarantees;
the first allocation realization module is configured to: when matching the multicast service identification information successfully, allocate a service queue corresponding to stored and successfully matched multicast service identification information to the multicast service, and realize the multicast service by adopting the service queue; and
the second allocation realization module is configured to: when matching the multicast service identification information unsuccessfully, allocate a default service queue to the multicast service, and realize the multicast service by adopting the default service queue.

6. The device according to claim 5, wherein:
the matching module is further configured to match user grade identification information carried in the multicast service joining request with self-stored user identification information; and
the first allocation realization module is further configured to: when matching the user grade identification information successfully, allocate a user queue to the multicast service according to configuration parameter information corresponding to the successfully matched user grade identification information; and when matching the user grade identification information unsuccessfully, allocate a default user queue to the multicast service;
and further comprising an updating module (34), wherein:
the updating module is configured to receive configuration parameter updating information, and establish a corresponding relation between the user grade identification information and updated configuration parameter information according to the updated configuration parameter information and the user grade identification information carried in the configuration parameter updating information.

7. The device according to claim 5, wherein:
the matching module is further configured to receive a multicast service releasing request, and match the multicast service identification information carried in the multicast service releasing request with the self-stored identification information of each multicast service requiring service guarantees; and
the device further comprises a releasing module (35), configured to: when matching the multicast service identification information successfully, release the service queue corresponding to the successfully matched multicast service identification information.

8. The device according to claim 6, wherein:
the updating module is further configured to receive service queue updating information, and establish a corresponding relation between the multicast service identification information and updated service queue information according to the updated service queue information and the multicast service identification information carried in the service queue updating information.

## Patentansprüche

1. Verfahren zur Ausführung eines Multicast-Dienstes, umfassend:
Empfangen einer Multicast-Dienstbeitrittsanfrage, und Abgleichen von Multicast-Dienstidentifikationsinformationen, welche in der Multicast-Dienstbeitrittsanfrage übertragen werden, mit selbst-gespeicherten Identifikationsinformationen jedes Dienstgarantien benötigenden Multicast-Dienstes;
wobei, wenn das Abgleichen der Multicast-Dienstidentifikationsinformationen erfolgreich durchgeführt wird, eine zu gespeicherten und erfolgreich abgeglichenen Multicast-Dienstidentifikationsinformationen korrespondierende Dienstwarteschlange dem Multicast-Dienst zugewiesen wird und der Multicast-Dienst durch das Anwenden der Dienstwarteschlange ausgeführt wird; und,
wenn das Abgleichen der Multicast-Dienstidentifikationsinformationen nicht erfolgreich durchgeführt wird, dem Multicast-Dienst eine Standarddienstwarteschlange zugewiesen wird, und der Multicast-Dienst durch das Anwenden der Standarddienstwarteschlange ausgeführt wird.

2. Verfahren nach Anspruch 1, weiter aufweisend:
Abgleichen von Benutzergüteklassenidentifikationsinformationen, die in der Multicast-Dienstbeitrittsanfrage übertragen werden, mit selbst-gespeicherten Benutzeridentifikationsinformationen; und
wenn das Abgleichen der Benutzergüteklassenidentifikationsinformationen erfolgreich durchgeführt wird, das Zuweisen einer Benutzerwarteschlange zu dem Multicast-Dienst gemäß Konfigurationsparameterinformationen, die zu den erfolgreich abgeglichenen Benutzergüteklassenidentifikationsinformationen korrespondieren; und, wenn das Abgleichen der Benutzergüteklassenidentifikationsinformationen nicht erfolgreich ist, das Zuweisen einer Standardbenutzerwarteschlange zu dem Multicast-Dienst;
Empfangen von Konfigurationsparameter-Aktualisierungsinformationen und Herstellen einer entsprechenden Relation zwischen den Benutzergüteklassenidentifikationsinformationen und aktualisierten Konfigurationsparameterinformationen gemäß den aktualisierten Konfigurationsparameterinformationen und den Benutzergüteklassenidentifikationsinformationen, die in den Konfigurationsparameter-Aktualisierungsinformationen übertragen werden.

3. Verfahren nach Anspruch 1, weiter aufweisend:
Empfangen einer Multicast-Dienstfreigabeanforderung und Abgleichen der Multicast-Dienstidentifikationsinformationen, die in der Multicast-Dienstfreigabeanforderung übertragen werden, mit den selbst-gespeicherten Multicast-Dienstidentifikationsinformationen von jedem jeweils Dienstgarantien benötigendem Multicast-Dienst; und,
wenn das Abgleichen der Multicast- Dienstidentifikationsinformationen erfolgreich durchgeführt wird, Freigeben der Dienstwarteschlange, die zu den erfolgreich abgeglichenen Multicast-Dienstidentifikationsinformationen korrespondiert.

4. Verfahren nach Anspruch 1, weiter aufweisend:
Empfangen von Dienstwarteschlangenaktualisierungsinformationen und Herstellen einer entsprechenden Relation zwischen den Multicast-Dienstidentifikationsinformationen und aktualisierten Dienstwarteschlageninformationen gemäß den aktualisierten Dienstwarteschlageninformationen und den Multicast-Dienstidentifikationsinformationen, die in den Dienstwarteschlangenaktualisierungsinformationen übertragen werden.

5. Vorrichtung zur Realisierung eines Multicast-Dienstes, umfassend ein Abgleichmodul (31), ein erstes Zuweisungsausführungsmodul (32) und ein zweites Zuweisungsausführungsmodul (33), wobei:
das Abgleichmodul dazu ausgebildet ist, eine Multicast-Dienstbeitrittsanforderung zu empfangen, und Multicast-Dienstidentifikationsinformationen, die in der Multicast-Dienstbeitrittsanforderung übertragen werden, mit selbst-gespeicherten Identifikationsinformationen eines jeden Dienstgarantien erfordernden Multicast-Dienstes abzugleichen;
das erste Zuweisungsrealisierungsmodul dazu ausgebildet ist:
wenn das Abgleichen der Multicast-Dienstidentifikationsinformationen erfolgreich durchgeführt wird, Zuweisen einer Dienstwarteschlange, die zu gespeicherten und erfolgreich abgeglichenen Multicast-Dienstidentifikationsinformationen korrespondiert, zu dem Multicast-Dienst und Ausführen des Multicast-Dienstes durch Anwenden der Dienstwarteschlange; und
das zweite Zuweisungsrealisierungsmodul dazu ausgebildet ist:
wenn das Abgleichen der Multicast-Dienstidentifikationsinformationen nicht erfolgreich durchgeführt wird, Zuweisen einer Standarddienstwarteschlagen zu dem Multicast-Dienst und Ausführen des Multicast-Dienstes durch Anwenden der Standarddienstwarteschlage.

6. Vorrichtung nach Anspruch 5, wobei:
das Abgleichmodul weiter dazu ausgebildet ist, Benutzergüteklassenidentifikationsinformationen, die in der Multicast-Dienstbeitrittsanfrage übertragen werden, mit selbst-gespeicherten Benutzeridentifikationsinformationen abzugleichen; und
das erste Zuweisungsrealisierungsmodul weiter dazu ausgebildet ist:
wenn das Abgleichen der Benutzergüteklassenidentifikationsinformationen erfolgreich durchgeführt wird, dem Multicast-Dienst eine Benutzerwarteschlange gemäß Konfigurationsparameterinformationen, die zu erfolgreich abgeglichenen Benutzergüteklassenidentifikationsinformationen korrespondieren zuzuweisen; und,
wenn das Abgleichen der Benutzergüteklassenidentifikationsinformationen nicht erfolgreich durchgeführt wird, dem Multicast-Dienst eine Standartbenutzerwarteschlange zuzuweisen;
und weiter aufweisend ein Aktualisierungsmodul (34), wobei:
das Aktualisierungsmodul dazu ausgebildet ist, Konfigurationsparameter-Aktualisierungsinformationen zu empfangen und eine korrespondierende Relation zwischen den Benutzergüteklassenidentifikationsinformationen und aktualisierten Konfigurationsparameterinformationen gemäß den aktualisierten Konfigurationsparameterinformationen und den Benutzergüteklassenidentifikationsinformationen, die mit den Konfigurationsparameter-Aktualisierungsinformationen übertragen werden, herzustellen.

7. Vorrichtung nach Anspruch 5, wobei:
das Abgleichmodul weiter dazu ausgebildet ist, eine Multicast-Dienstfreigabeanforderung zu empfangen, und die Multicast-Dienstidentifikationsinformationen, die in der Multicast-Dienstfreigabeanforderung übertragen werden, mit den selbst-gespeicherten Dienstidentifikationsinformationen von jedem, jeweils Dienstgarantien benötigendem Multicast-Dienst, abzugleichen; und
die Vorrichtung weiter ein Freigabemodul (35) aufweist, das dazu ausgebildet ist, wenn das Abgleichen der Identifikationsinformationen des Multicast-Dienstes erfolgreich durchgeführt wird, die Dienstwarteschlange freizugeben, die zu den erfolgreich abgeglichenen Multicast-Dienstidentifikationsinformationen korrespondiert.

8. Vorrichtung nach Anspruch 6, wobei das Aktualisierungsmodul weiter dazu ausgebildet ist, Dienstwarteschlangenaktualisierungsinformationen zu empfangen und eine entsprechende Relation zwischen den Multicast-Dienstidentifikationsinformationen und aktualisierten Dienstwarteschlageninformationen gemäß den aktualisierten Dienstwarteschlageninformationen und den Multicast-Dienstidentifikationsinformationen, die in den Dienstwarteschlangenaktualisierungsinformationen übertragen werden, herzustellen.

## Revendications

1. Procédé pour réaliser un service de diffusion groupée, comprenant les étapes suivantes :
recevoir une demande d'adjonction à un service de diffusion groupée, et mettre en correspondance des informations d'identification de service de diffusion groupée portées dans la demande d'adjonction à un service de diffusion groupée avec des informations d'identification auto-stockées de chaque service de diffusion groupée qui nécessite des garanties de service ;
une fois la mise en correspondance des informations d'identification de service de diffusion groupée réussie, attribuer une file d'attente de service qui correspond aux informations d'identification de service de diffusion groupée stockées et mises en correspondance avec succès au service de diffusion groupée et réaliser le service de diffusion groupée en adoptant la file d'attente de service ; et
en cas d'échec de la mise en correspondance des informations d'identification de service de diffusion groupée, attribuer une file d'attente de service par défaut au service de diffusion groupée, et réaliser le service de diffusion groupée en adoptant la file d'attente de service par défaut.

2. Procédé selon la revendication 1, comprenant en outre les étapes suivantes :
mettre en correspondance des informations d'identification de classe d'utilisateur portées dans la demande d'adjonction à un service de diffusion groupée avec des informations d'identification d'utilisateur auto-stockées ; et
une fois la mise en correspondance des informations d'identification de classe d'utilisateur réussie, attribuer une file d'attente d'utilisateur au service de diffusion groupée selon des informations de paramètres de configuration qui correspondent aux informations d'identification de classe d'utilisateur mises en correspondance avec succès ; et en cas d'échec de la mise en correspondance des informations d'identification de classe d'utilisateur, attribuer une file d'attente d'utilisateur par défaut au service de diffusion groupée ;
et comprenant en outre les étapes suivantes :
recevoir des informations de mise à jour de paramètres de configuration, et établir une relation correspondante entre les informations d'identification de classe d'utilisateur et les informations de paramètres de configuration mises à jour selon les informations de paramètres de configuration mises à jour et les informations d'identification de classe d'utilisateur portées dans les informations de mise à jour de paramètres de configuration.

3. Procédé selon la revendication 1, comprenant en outre les étapes suivantes :
recevoir une demande de distribution d'un service de diffusion groupée, et mettre en correspondance les informations d'identification de service de diffusion groupée portées dans la demande de distribution d'un service de diffusion groupée avec les informations d'identification auto-stockées de chaque service de diffusion groupée qui nécessite des garanties de service ; et
une fois la mise en correspondance des informations d'identification de service de diffusion groupée réussie, distribuer la file d'attente de service qui correspond aux informations d'identification de service de diffusion groupée mises en correspondance avec succès.

4. Procédé selon la revendication 1, comprenant en outre l'étape suivante :
recevoir des informations de mise à jour de file d'attente de service, et établir une relation de correspondance entre les informations d'identification de service de diffusion groupée et les informations de file d'attente de service mises à jour selon les informations de file d'attente de service mises à jour et les informations d'identification de service de diffusion groupée portées dans les informations de mise à jour de file d'attente de service.

5. Dispositif pour réaliser un service de diffusion groupée, comprenant un module de mise en correspondance (31), un premier module de réalisation d'attribution (32) et un deuxième module de réalisation d'attribution (33), dans lequel :
le module de mise en correspondance est configuré pour recevoir une demande d'adjonction à un service de diffusion groupée, et pour mettre en correspondance des informations d'identification de service de diffusion groupée portées dans la demande d'adjonction à un service de diffusion groupée avec des informations d'identification auto-stockées de chaque service de diffusion groupée qui nécessite des garanties de service ;
le premier module de réalisation d'attribution est configuré pour : une fois la mise en correspondance des informations d'identification de service de diffusion groupée réussie, attribuer une file d'attente de service qui correspond aux informations d'identification de service de diffusion groupée stockées et mises en correspondance avec succès au service de diffusion groupée et réaliser le service de diffusion groupée en adoptant la file d'attente de service ; et
le deuxième module de réalisation d'attribution est configuré pour : en cas d'échec de la mise en correspondance des informations d'identification de service de diffusion groupée, attribuer une file d'attente de service par défaut au service de diffusion groupée, et réaliser le service de diffusion groupée en adoptant la file d'attente de service par défaut.

6. Dispositif selon la revendication 5, dans lequel :
le module de mise en correspondance est en outre configuré pour mettre en correspondance des informations d'identification de classe d'utilisateur portées dans la demande d'adjonction à un service de diffusion groupée avec des informations d'identification d'utilisateur auto-stockées ; et
le premier module de réalisation d'attribution est en outre configuré pour : une fois la mise en correspondance des informations d'identification de classe d'utilisateur réussie, attribuer une file d'attente d'utilisateur au service de diffusion groupée selon des informations de paramètres de configuration qui correspondent aux informations d'identification de classe d'utilisateur mises en correspondance avec succès ; et en cas d'échec de la mise en correspondance des informations d'identification de classe d'utilisateur, attribuer une file d'attente d'utilisateur par défaut au service de diffusion groupée ;
et comprenant en outre un module de mise à jour (34), dans lequel :
le module de mise à jour est configuré pour recevoir des informations de mise à jour de paramètres de configuration, et établir une relation correspondante entre les informations d'identification de classe d'utilisateur et les informations de paramètres de configuration mises à jour selon les informations de paramètres de configuration mises à jour et les informations d'identification de classe d'utilisateur portées dans les informations de mise à jour de paramètres de configuration.

7. Dispositif selon la revendication 5, dans lequel :
le module de mise en correspondance est en outre configuré pour recevoir une demande de distribution d'un service de diffusion groupée, et mettre en correspondance les informations d'identification de service de diffusion groupée portées dans la demande de distribution d'un service de diffusion groupée avec les informations d'identification auto-stockées de chaque service de diffusion groupée qui nécessite des garanties de service ; et
le dispositif comprend en outre un module de distribution (35) configuré pour : une fois la mise en correspondance des informations d'identification de service de diffusion groupée réussie, distribuer la file d'attente de service qui correspond aux informations d'identification de service de diffusion groupée mises en correspondance avec succès.

8. Dispositif selon la revendication 6, dans lequel :
le module de mise à jour est en outre configuré pour recevoir des informations de mise à jour de file d'attente de service, et établir une relation de correspondance entre les informations d'identification de service de diffusion groupée et les informations de file d'attente de service mises à jour selon les informations de file d'attente de service mises à jour et les informations d'identification de service de diffusion groupée portées dans les informations de mise à jour de file d'attente de service.
